# EUROPÄISCHE PATENTANMELDUNG

(11) **EP 0 755 029 A2**
(43) Veröffentlichungstag der Anmeldung: **22.01.1997**
(21) Anmeldenummer: 96110896.6
(22) Anmeldetag: 05.07.1996
(51) Int. Cl.: G07C 5/00

(54) **Diagrammscheibe für einen Fahrtschreiber mit einer fahrerbezogenen Kennzeichnung**

(30) Priorität: 15.07.1995 DE 29511487 U
(71) Anmelder: VDO Kienzle GmbH, 78052 Villingen-Schwenningen (DE)
(72) Erfinder: Straub, Dietmar, 78056 Villingen-Schwenningen (DE)

(57) **Zusammenfassung**

Zur Verbesserung der Lesbarkeit der vom Fahrer vorzunehmenden Eintragung auf einer Diagrammscheibe und zur Ermöglichung der Maschinenlesbarkeit dieser Eintragung wird vorgeschlagen, auf der Diagrammscheibe stilisierte Kennzeichnungselemente vorzugeben, die vom Fahrer zu kennzeichnen sind, um einen Bezug zwischen Fahrer und Diagrammscheibe herzustellen.

## Beschreibung

Die Erfindung betrifft eine Diagrammscheibe für einen Fahrtschreiber mit einer fahrerbezogenen Kennzeichnung. Diagrammscheiben sind in einem Fahrtschreiber verwendete Datenträger, mit deren Hilfe die Einhaltung der vom Fahrer zu beachtenden Arbeitszeitrichtlinien überwacht werden kann. Dieser Verwendungszweck der Diagrammscheiben bedingt eine Zuordnung der Diagrammscheibe zum Fahrer des Fahrzeugs. Gegenwärtig erfolgt diese Zuordnung üblicherweise dadurch, daß der Fahrer auf der Diagrammscheibe seinen Namen oder eine andere zur Identifikation geeignete Kennzeichnung handschriftlich einträgt. Diese Eintragungen sind bisweilen unleserlich, so daß der Zweck der Eintragung nicht erreicht wird.

Es ist die Aufgabe der vorliegenden Erfindung, eine Diagrammscheibe bezüglich ihrer fahrerbezogenen Kennzeichnung so auszubilden, daß die Kennzeichnung leichter und eindeutiger lesbar ist, wobei unter Berücksichtigung der in der Praxis vorhandenen Gegebenheiten die Aufbringung der Kennzeichnung leicht handhabbar und kostengünstig ohne größeren apparativen Aufwand realisierbar sein muß.

Die Aufgabe wird durch die Merkmale des ersten Anspruchs gelöst. Die abhängigen Ansprüche betreffen vorteilhafte Ausgestaltungen der gefundenen Lösung.

Die gefundene Lösung verbessert nicht nur die Lesbarkeit der vom Fahrer vorzunehmenden Eintragung, sondern hat auch den Vorteil der Maschinenlesbarkeit dieser Kennzeichnung.

Anhand von 2 Figuren soll die vorgeschlagene Lösung näher erläutert werden.

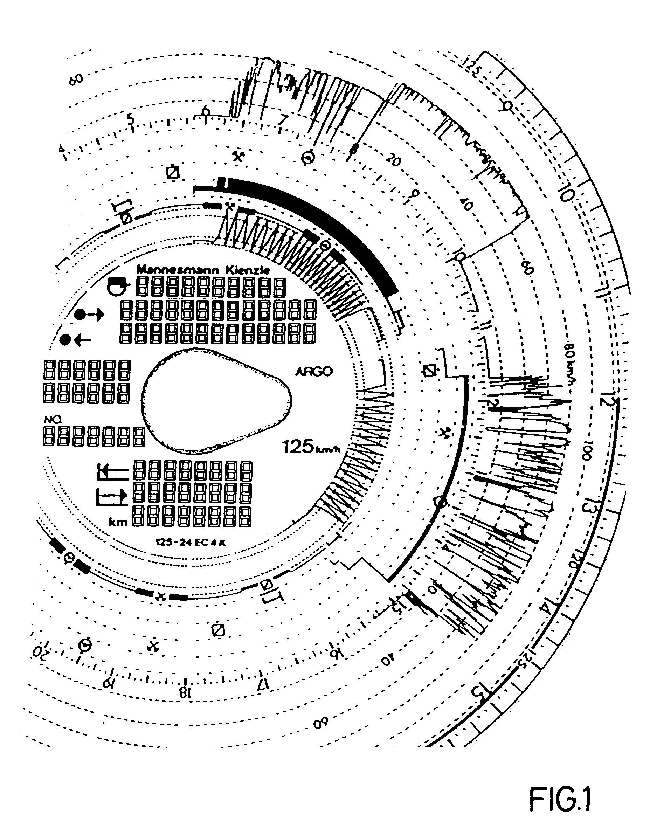

**Figur 1** zeigt ein Ausführungsbeispiel für die vorgeschlagene Neugestaltung des Innenfeldes einer Diagrammscheibe anhand einer Ausschnittsvergrößerung. Auf der Diagrammscheibe sind aus Segmenten bestehende Kennzeichnungselemente mit zum Beschriftungsfeld der Diagrammscheibe kontrastarm ausgebildeten Segmentflächen vorgedruckt, die durch Kontrastbildung einzelner ausgewählter Segmente der Kennzeichnungselemente einen Bezug vom Fahrer zur Diagrammscheibe herstellbar machen. Der Fahrer trägt alle geforderten Informationen auf der Diagrammscheibe nicht dadurch ein, daß er sie in Worten ausschreibt, sondern er schwärzt einzelne Segmente oder Abschnitte der Kennzeichnungselemente, wodurch die von ihm einzutragende Information stilisiert dargestellt wird. In der Figur 1 besteht jedes Zeichen der Kennzeichnungselemente beispielhaft aus sieben Segmenten. Zur Darstellung alphanumerischer Informationen sind Zeichen aus jeweils 16 Segmenten vorteilhafter. Weitere erfindungsgemäße Typen von Kennzeichnungselementen sind denkbar. Allen Darstellungsvarianten ist aber gemeinsam, daß ihre räumliche Anordnung auf der Diagrammscheibe fest vorgegeben ist, und zwar vorzugsweise durch einen Vordruck im Innenfeld der Diagrammscheibe. Die Kennzeichnungselemente werden dadurch mit Informationsgehalt versehen, daß der Fahrer Teilbereiche der Kennzeichnungselemente, dh deren Segmente, kennzeichnet, wodurch eine optische Veränderung zum ursprünglichen Erscheinungsbild hervorgerufen wird. Die gekennzeichneten Segmente heben sich durch einen stärkeren Kontrast von ihrem Umfeld ab. Dazu kann der Fahrer einzelne Segmentflächen zB mit einem Kugelschreiber oder Bleistift ausmalen und so sinnvoll zu Schriftzeichen verbinden. Die Segmente der Kennzeichnungselemente können beispielsweise aber auch so ausgebildet sein, daß sie sich durch äußeren mechanischen Druck von selbst verfärben und dadurch zu den unberührten Teilbereichen der Kennzeichnungselemente einen optischen Kontrast hervorrufen. Die Lesbarkeit erfindungsgemäß angefertigter Eintragungen wird aufgrund ihrer Stilisierung sowohl für eine Sichtauswertung als auch für eine maschinelle Auswertung verbessert, da der Einfluß von Eigenheiten der Handschrift des Fahrers eliminiert ist. Mit einem Scanner können die Eintragungen leicht gelesen und durch eine EDV-Anlage ausgewertet werden.

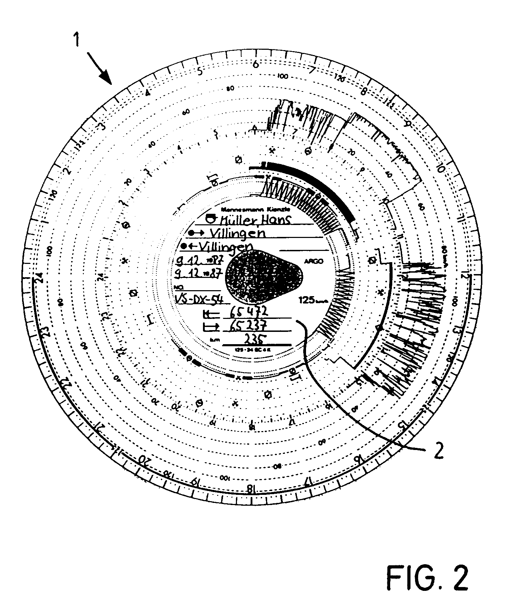

**Figur 2** zeigt dazu im Vergleich eine typische Diagrammscheibe 1 nach dem Stand der Technik. Im äußeren Bereich der Diagrammscheibe erfolgt eine automatische, uhrzeitrichtige Aufzeichnung von gesetzlich vorgeschriebenen Daten. Sie werden von Schreibmitteln des Fahrtschreibers aufgetragen. Auf diesen Teil der Aufzeichnung soll hier nicht näher eingegangen werden. Im Innenfeld 2 der Diagrammscheibe 1 werden die Eintragungen vorgenommen, die der Zuordnung der Diagrammscheibe zum Fahrer dienen. Sie erfolgen handschriftlich.

## Patentansprüche

1. Diagrammscheibe für einen Fahrtschreiber mit einer fahrerbezogenen Kennzeichnung, gekennzeichnet durch eine Vorgabe von stilisierten Kennzeichnungselementen auf der Diagrammscheibe, wobei ein Bezug vom Fahrer zur Diagrammscheibe durch Kennzeichnung einzelner Kennzeichnungselemente herstellbar ist.

2. Diagrammscheibe nach Anspruch 1, dadurch gekennzeichnet, daß die Kennzeichnungselemente auf der Diagrammscheibe drucktechnisch vorgegeben sind.

3. Diagrammscheibe nach einem oder mehreren der vorangegangenen Ansprüche, dadurch gekennzeichnet, daß sich die Kennzeichnungselemente im Innenfeld der Diagrammscheibe befinden.

4. Diagrammscheibe nach einem oder mehreren der vorangegangenen Ansprüche, dadurch gekennzeichnet, daß die Kennzeichnungselemente aus mehreren Segmenten bestehen, wobei für die fahrerbezogene Kennzeichnung einzelne Segmente der Kennzeichnungselemente ausgewählt werden.

5. Diagrammscheibe nach einem oder mehreren der vorangegangenen Ansprüche, dadurch gekennzeichnet, daß die Kennzeichnungselemente aus zu alphanumerischen Schriftzeichen zusammensetzbaren Schriftzeichensegmenten bestehen.

6. Diagrammscheibe nach einem oder mehreren der vorangegangenen Ansprüche, dadurch gekennzeichnet, daß die Kennzeichnung einzelner Kennzeichnungselemente dadurch erfolgt, daß Segmente der Kennzeichnungselemente im Vergleich zu ihrem ursprünglichen Erscheinungsbild optisch verändert werden.

7. Diagrammscheibe nach einem oder mehreren der vorangegangenen Ansprüche, dadurch gekennzeichnet, daß während der Kennzeichnung der Kontrast von Segmentflächen der Kennzeichnungselemente im Vergleich zu ihrem ursprünglichen Erscheinungsbild und im Vergleich zum kontrastarmen Erscheinungsbild des Beschriftungsfeldes vergrößert wird.

8. Diagrammscheibe nach einem oder mehreren der vorangegangenen Ansprüche, dadurch gekennzeichnet, daß die Kontrastbildung einzelner Segmente der Kennzeichnungselemente durch eine äußerlich auftragbare Farbgebung erfolgt.

9. Diagrammscheibe nach einem oder mehreren der vorangegangenen Ansprüche, dadurch gekennzeichnet, daß die Kontrastbildung der ausgewählten Segmente der Kennzeichnungselemente durch deren Verfärbung beim Aufbringen eines äußeren mechanischen Drucks erfolgt.

10. Diagrammscheibe nach einem oder mehreren der vorangegangenen Ansprüche, dadurch gekennzeichnet, daß auf der Diagrammscheibe so viele Kennzeichnungselemente vorgesehen sind, so daß eine Darstellung komplexer Informationen wie vollständiger Datenworte möglich ist.
